# EUROPEAN PATENT APPLICATION

(11) **EP 1 902 798 A1**
(43) Date of publication of application: **26.03.2008**
(21) Application number: 06767624.7
(22) Date of filing: 29.06.2006
(51) Int. Cl.: B23B 19/02, B23B 37/00, B06B 1/02

(54) **ULTRASONIC MACHINING SPINDLE DEVICE**

(30) Priority: 01.07.2005 JP 2005193466
(71) Applicant: Bosch Corporation, Shibuya-ku Tokyo 150-8360 (JP)
(72) Inventor: KUBOTA, Osamu, c/o BOSCH CORPORATION,, Higashi-Matsuyama-shi, Saitama 3558603 (JP); YUI, Takayuki, c/o BOSCH CORPORATION,, Higashi-Matsuyama-shi, Saitama 3558603 (JP); HURUKAWA, Hideo, c/o BOSCH CORPORATION,, Higashi-Matsuyama-shi, Saitama 3558603 (JP)
(74) Representative: Knapp, Thomas
(86) International application number: PCT/JP2006/313007
(87) International publication number: WO 2007/004515

(57) **Abstract**

A stable supply of electric signals to an ultrasonic generator is enabled without causing wear and damage to components and requiring a periodic replacement thereof.

A receiver coil 11 connected to a transducer 6 is wound round an outer circumferential surface of a housing 1 which makes up a shaft 30 of a spindle 101, while a transmitter coil 12 is provided concentrically round the periphery of the receiver coil 11 so provided at an appropriate interval, whereby a predetermined electric signal outputted from an ultrasonic generator 21 to drive the transducer 6 is applied to the transmitter coil 12, so that the application of a predetermined electric signal to the transducer 6 via the receiver coil 11 is enabled by virtue of electromagnetic induction between the transmitter coil 12 and the receiver coil 11.

## Description

### Technical Field

The present invention relates to an ultrasonic spindle system and more particularly to an ultrasonic spindle system in which enhancement in reliability in supplying electric power to an ultrasonic generator and simplification in construction are attempted to be realized.

### Background Art

In recent years, various machine tools which employ a machining method referred to as an ultrasonic milling in which a machining operation is performed while imparting ultrasonic vibrations in an axial direction of the tool have been proposed due to enhancement in machining accuracy and smooth discharge of chips being realized (for example, refer to Patent Document No. 1).

In the system in which the ultrasonic milling is performed, a configuration is adopted in which a generator for generating ultrasonic waves is mounted in the vicinity of a rotary tool for rotation together with the tool. In addition, although the ultrasonic generator needs the supply of electric signals, in the supply of electric signals, it is a most generally adopted configuration in which a slip ring is mounted on a shaft on which the rotary tool is held and a feeding brush is provided in such a manner as to slide relative to this slip ring.

In a conventional configuration like one that has been described above, however, since the slip ring and the feeding brush are kept in contact with each other at all times, they wear and are damaged strongly, and because of this, in addition to problems that the replacement of feeding brushes occurs frequently and that a stable and highly reliable machining operation cannot be secured, there has been an inherent problem that a demand for high-speed rotations cannot be satisfied due to a limit being imposed to the rotational frequency with a view to reducing the wear and damage of the slip ring.

Patent document 1: Japanese Patent Application Laid-open No. 20.02-346817

### Disclosure of the Invention

### Problems to be Solved by the Invention

The invention was made in view of the situations described above and was intended to provide an ultrasonic spindle system which enables a stable supply of electric signals to an ultrasonic generator and, moreover, which can secure high-speed rotations without causing wear and damage and requiring a periodic replacement of parts.

### Means for Solving the Problems

According to an aspect of the invention, there is provided an ultrasonic spindle system having a shaft on which a tool is mounted and a transducer for generating ultrasonic waves to ultrasonically vibrate the tool is provided, wherein:
a receiver means connected to the transducer and adapted to receive an excitation signal for the transducer which is transmitted in a non-contact fashion from the outside is provided on the shaft; and in that
a transmitter means for transmitting an electric signal for the ultrasonic generator to the receiver means in the non-contact fashion is provided in the vicinity of the shaft.

### Advantage of the Invention

According to the invention, being different from the conventional construction, since electrical energy for driving the transducer can be supplied in the non-contact fashion from the periphery, not only there is no component to wear or be damaged due to the supply of the electrical gained energy, but also a component like the conventional feeding brush which needs a periodic replacement does not have to be used, and because of this, there is provided an advantage that the driving of the transducer can stably be performed, and hence an ultrasonic spindle system which is highly reliable can be provided.

In addition, being different from the conventional construction, since no such configuration is adopted that a component which affects the rotational speed, for example, the slip ring is not needed, there is provided an advantage that a stable machining of work can be implemented by a higher rotational speed compared with the conventional one.

### Brief Description of Drawings

FIG. 1 is a configuration drawing which shows a configuration example of a main part of an ultrasonic spindle system according to an embodiment of the invention.
FIG. 2 is a configuration drawing which shows another example of arrangement of a receiver coil and a transmitter coil in the configuration example shown in Fig. 1.
FIG. 3 is a configuration drawing which shows the configuration of a main part of an ultrasonic spindle system according to a second configuration example of the embodiment of the invention.

### Explanation of Codes

- 1: housing
- 2a,2b: bearing
- 6: transducer
- 7: ultrasonic transducer unit
- 8: horn
- 9: tool
- 11: receiver coil
- 12: transmitter coil
- 30: shaft
- 50: high frequency motor
- 101: spindle

### Description of Specific Embodiment

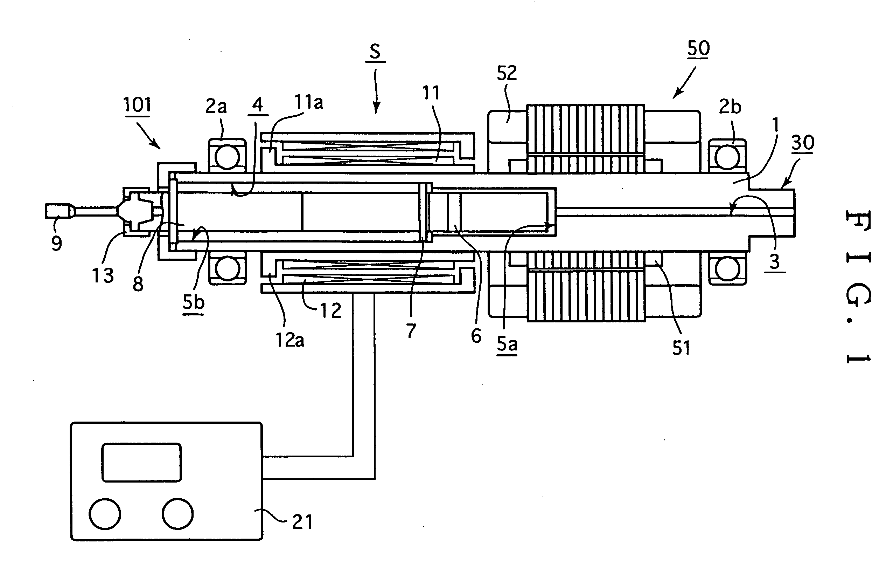

Hereinafter, embodiments of the present invention will be described with reference to FIG. 1 to FIG. 3.

Note that members and arrangements which will be described below are not such as to limit the invention but can be modified variously within the spirit and scope of the invention.

Firstly, referring to Fig. 1, a configuration example of an ultrasonic spindle system according to an embodiment of the invention will be described.

Fig. 1 is such as to show, in particular, the configuration of a spindle 101 which constitutes a main part of an ultrasonic spindle system S of the embodiment of the invention and the vicinity thereof and the spindle 101 has a shaft 30 which is rotatably supported by bearings 2a, 2b and a high frequency motor 50 for rotating the shaft 30, and is configured such that a transducer 6, a horn 8 and the like which constitutes an ultrasonic generator are provided on the shaft 30 as will be described later, and a tool grasping portion 13 for securely grasping a tool 9 is provided at a tip portion of the shaft 30.

Hereinafter, specifically describing the configuration, firstly, the bearings 2a, 2b, which are ball bearings, are fitted on an outer circumference of the shaft 30 in locations lying in the vicinity of both end portions thereof, and the bearings 2a, 2b are made to be supported on fixed locations, not shown, of the ultrasonic spindle system S of the embodiment of the invention, whereby the shaft 30 is rotatably supported by the bearings 2a, 2b. Note that the bearings 2a, 2b do not have to be limited to the ball bearings, and hence, any type of bearings can be used, provided that they can support the shaft 30 rotatably. For example, a fluid bearing such as an air bearing may be adopted.

Furthermore, the high frequency motor 50 is installed on the outer circumference of the shaft 30 in a location which lies slightly closer towards a rear end portion from near the center of the shaft 30. Namely, the high frequency motor 50 is configured such that a rotor 51 is secured to an outer circumferential surface of the shaft 30, while a stator 52 is disposed in such a manner as to surround this rotor 51. In addition, the shaft 30 is made to be able to rotate together with the rotor 51.

Note that the high frequency motor 50 has the publicly and widely known configuration, a detained description thereof will be omitted here.

On the other hand, the shaft 30 is configured to have a housing 1, and the transducer 6, the horn 8 and the like which are provided in an interior thereof as will be described later on.

The housing 1 is formed in to an elongated hollow shape, which is made to open on a rear end portion side thereof (an opposite side to an end portion where the tool grasping portion 13 is provided), and an oil path 3 for supplying a cutting oil from the outside is formed to an appropriate position along a center axis of the housing 1. In addition, a provision hole 4 is drilled in such a manner as to communicate with the oil path 3 and to be made to open to the other end side of the housing 1.

The provision hole 4 is such as to be made up of a small-diameter portion 5a which communicates directly with the oil path 3 and a large-diameter portion 5b which follows the small-diameter portion 5a.

For example, the transducer 6 made up of a piezoelectric ceramic is accommodated in the small-diameter portion 5a. An ultrasonic transducer unit 7 for converting electrical vibrations of the transducer 6 into ultrasonic vibrations is connected to the transducer 6, and in this configuration example, the ultrasonic transducer unit 7 is provided within the large-diameter portion 5b in a location in the vicinity of the small-diameter portion 5a.

In addition, the ultrasonic transducer unit 7 is provided in the large-diameter portion 5b in such a state that the horn 8, which is formed substantially into a cylindrical shape so as to transmit ultrasonic vibrations efficiently, is connected to the ultrasonic transducer unit 7.

The horn 8 is such as to be set to an appropriate length according to frequencies, intensities and the like of ultrasonic waves used as the horn 8 transmits ultrasonic waves applied thereto via the ultrasonic transducer unit 7 with good efficiency in an axial direction thereof and moreover transmits ultrasonic vibrations at its maximum amplitude to the tool 9 securely mounted on the tool grasping portion 13 provided at a tip portion of the horn 8.

The horn 8 of the embodiment of the invention is configured to project outwards from the housing 1 in the vicinity of one end portion thereof, so that the tool grasping portion 13 is provided on the portion so protruding.

In addition, although fixing employing a shrinking system or fixing employing a thread engagement can be adopted in mounting the tool on the tool grasping portion 13, in the embodiment of the invention, the fixing method does not have to be limited to any specific method but is to be selected arbitrarily.

Furthermore, a receiver coil 11 for supplying electric signals to the transducer 6 from the outside in a non-contact fashion is provided on the shaft 30 of the embodiment of the invention, and the receiver coil 11 so provided is connected to the transducer 6. Namely, the receiver coil 11 is formed substantially into a cylindrical shape by being wound round a receiver coil holder 11a which is formed of an insulation member into a hollow cylindrical shape. In addition, the housing 1 is fittingly inserted into a hollow portion of the receiver coil holder 11a, so that the receiver coil 11 is fitted on the housing 1 in an appropriate position thereof.

On the other hand, a transmitter coil 12 is provided in such a manner as to surround the receiver coil 11 concentrically relative to the receiver coil 11 and via an appropriate space. This transmitter coil 12 is to be mounted in a fixed location, not shown, on the ultrasonic spindle system S of the embodiment of the invention.

The transmitter coil 12 of the embodiment of the invention is such as to be wound into a hollow cylindrical shape round an inner wall of a transmitter coil holder 12a which is formed of an insulation member substantially into a hollow cylindrical shape.

An ultrasonic generator 21 is connected to the transmitter coil 12, so that predetermined electric signals for the transducer 6 are applied thereto. Normally, while the driving of the transducer 6 is implemented by applying a pulse signal or a sine wave signal thereto, such predetermined signals are made to be applied to the transmitter coil 12 from the ultrasonic generator 21.

Then, by virtue of voltage, current changes generated in the transmitter coil 12, a voltage and current which correspond to the changes in voltage and current in the transmitter coil 12 are generated in the receiver coil 11 due to electromagnetic induction, and the voltage and current so generated are applied to the transducer 6, whereby the transducer 6 is driven. Note that a configuration is preferably adopted in which a rectifying circuit or the like is provided between the receiver coil 11 and the transducer 6, so that the voltage and current induced in the receiver coil 11 are converted to desired levels and waveform rectifications are implemented thereto for later application to the transducer 6.

Note that since nothing in the overall operation of the ultrasonic spindle system S basically differs from a publicly known one, a detailed description thereof will be omitted here.

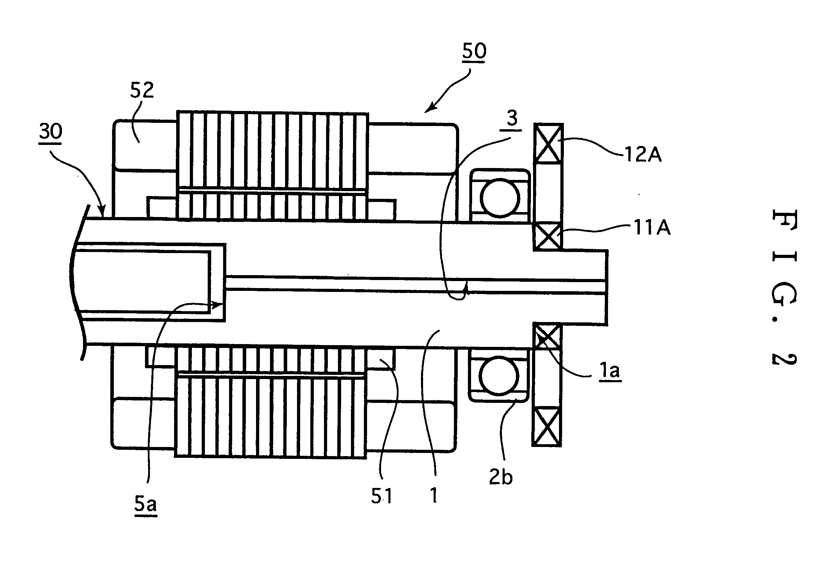

While in the configuration example that has been described heretofore, the receiver coil 11 and the transmitter coil 12 are provided in the vicinity of the relatively central portion of the housing 1, a configuration may be adopted in which the coils are provided on a rear end side of the housing 1, as is shown in Fig. 2.

Namely, in Fig. 2, a receiver coil 11A is provided in a stepped portion 1a which is formed in a rear end portion of the housing 1, while a transmitter coil 12A is provided concentrically with the receiver coil 11A.

Note that since the operation, function and the like thereof do not differ from those of the configuration example shown in Fig. 1, the repetition of the same description will be omitted here.

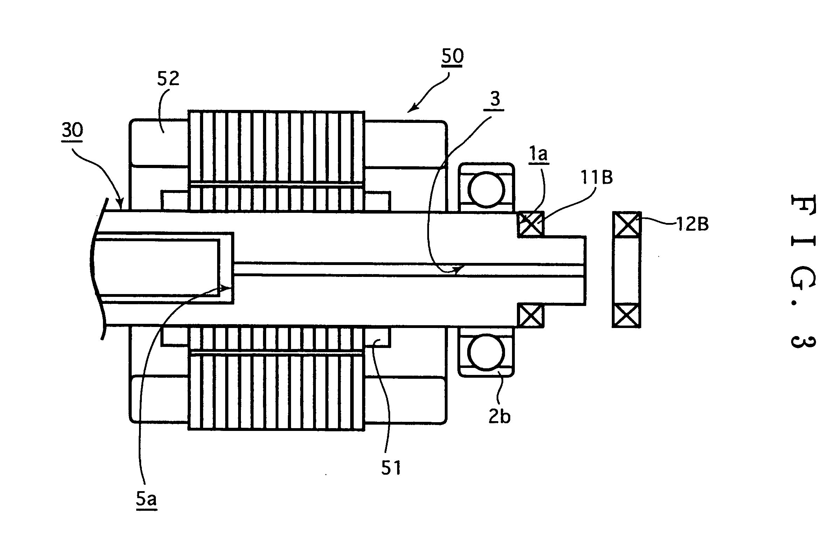

Next, referring to Fig. 3, a second configuration example will be described. Note that like reference numerals will be given to like constituent elements to those of the configuration example shown in Fig. 1, so that a detailed description thereof will be omitted here, and in the following description, different points will mainly be described.

The second configuration example is an example in which a receiver coil 11B and a transmitter coil 12B are provided on the same imaginary axis while being separated at an appropriate interval.

Namely, specifically, the receiver coil 11B is such as to be provided in a stepped portion 1a formed in a rear end portion of a housing 1, and a center of the receiver coil 11B is made to coincide substantially with an imaginary center axis of a shaft 30, in other words, an imaginary center axis of the housing 1.

On the other hand, the transmitter coil 12B is made to be provided on the imaginary center axis of the receiver coil 11B in such a manner as to be separated from the receiver coil 11B at the appropriate interval in a direction in which it moves apart from the shaft 30. In addition, this transmitter coil 12B is made to be supported in a fixed location, not shown, on the ultrasonic spindle system S.

Note that since the operation, function and the like thereof do not differ from those of the configuration example shown in Fig. 1, the repetition of the same description will be omitted here.

Thus, in the ultrasonic spindle system according to the embodiment of the invention, being different from the conventional construction, since the configuration is adopted in which the component such as the slip ring which limits the rotational speed of the shaft is not used to drive the transducer 6, the rotation of the shaft which is faster and more stable than those of the conventional construction can be obtained.

### Industrial Applicability

The supply of electrical energy to the ultrasonic transducer is configured to be implemented in the non-contact fashion, whereby the configuration can be simplified and miniaturized, comparing with the conventional construction, and hence, the invention is applicable to an ultrasonic spindle system which is desired to be miniaturized.

## Claims

1. An ultrasonic spindle system having a shaft on which a tool is mounted and a transducer for generating ultrasonic waves to ultrasonically vibrate the tool is provided, the ultrasonic spindle system being **characterized in that**:
receiver means connected to the transducer and adapted to receive an excitation signal for the transducer which is transmitted in a non-contact fashion from the outside is provided on the shaft; and **in that**
transmitter means for transmitting an electric signal for the ultrasonic generator to the receiver means in the non-contact fashion is provided in the vicinity of the shaft.

2. An ultrasonic spindle system as set forth in Claim 1, **characterized in that** the receiver means has a coil securely mounted on the shaft and **in that** the transmitter means has a coil which is provided in the vicinity of the shaft in such a manner as to be electromagnetically connected to the coil securely mounted on the shaft.

3. An ultrasonic spindle system as set forth in Claim 2, **characterized in that** the coil making up the receiver means is provided on an outer circumferential surface of the shaft, while the coil making up the transmitter means is provided concentrically with the coil provided on the outer circumferential surface of the shaft in such a manner as to surround the coil.

4. An ultrasonic spindle system as set forth in Claim 2, **characterized in that** the coil which makes up the receiver means and the coil which makes up the transmitter means are provided on the same imaginary axis at an appropriate interval.
